# EUROPÄISCHE PATENTSCHRIFT

(11) **EP 4 261 490 B1**
(45) Veröffentlichungstag und Bekanntmachung des Hinweises auf die Patenterteilung: **16.09.2026**
(21) Anmeldenummer: 23166925.0
(22) Anmeldetag: 06.04.2023
(51) Int. Cl.: F41G 7/22, G05D 1/00

(54) **VERFAHREN ZUM AUSWEICHEN EINES FLUGKÖRPERS VOR EINEM ABFANGFLUGKÖRPER**
METHOD FOR MIGRATING A MISSILE IN FRONT OF A INTERCEPTOR MISSILE
PROCÉDÉ D'ÉVITEMENT D'UN MISSILE AVANT UN MISSILE D'INTERCEPTION

(30) Priorität: 13.04.2022 DE 102022001289
(43) Veröffentlichungstag der Anmeldung: 18.10.2023
(73) Patentinhaber: Diehl Defence GmbH & Co. KG, 88662 Überlingen (DE)
(72) Erfinder: Kuhn, Thomas, 88633 Heiligenberg (DE)
(74) Vertreter: Diehl Patentabteilung

(56) Entgegenhaltungen:
- CN-A- 103 090 745
- CN-A- 105 759 612
- DE-A1- 19 603 771

## Beschreibung

Die Erfindung betrifft ein Verfahren zum Ausweichen eines Flugkörpers vor einem Abfangflugkörper, bei dem der Flugkörper auf ein Ziel zufliegt.

Zur Bekämpfung von Seezielen durch einen Flugkörper muss dieser in der Regel weite Strecken überwinden und hierbei - zumindest auf den letzten Kilometern - möglichst tief fliegen, um spät entdeckt zu werden. Zudem sind gegebenenfalls gegnerische Verteidigungen weiträumig zu umfliegen. Im Anflug auf das Ziel wird der Flugkörper schlussendlich von Abwehrflugkörpern angegriffen, denen er mit scharfen Manövern ausweichen muss. All diese Randbedingungen erfordern viel Treibstoff, sodass die Reichweite durch den beschränkten Treibstoffvorrat eingeschränkt ist.

Aus der CN 103090745 A ist ein Verfahren zum Ausweichen eines Flugkörpers vor einem Abfangflugkörper bekannt, bei dem der Flugkörper kurz vor dem Zusammentreffen der beiden Flugkörper Beschleunigungsraketen zündet und sich so aus der Flugbahn des Abfangflugkörpers katapultiert.

Die CN 105759612 A offenbart ein Ausweichen eines Flugkörpers vor einem Abfangflugkörper, bei dem der Flugkörper zum Ausweichen auf eine hinterlegte Optimaltrajektorie zurückgreift. Diese wurde analytischen durch Lösung eines Dreikörperproblems berechnet.

Es ist daher eine Aufgabe der Erfindung, ein Verfahren zum treibstoffeffizienten Lenken eines Flugkörpers anzugeben und einen Flugkörper, der zum treibstoffeffizienten Lenken in der Lage ist.

Die auf das Verfahren gerichtete Aufgabe wird durch ein Verfahren zum Ausweichen eines Flugkörpers zum Bekämpfen eines Ziels mit einem Triebwerk vor einem Abfangflugkörper gemäß den Merkmalen von Patentanspruch 1 gelöst, bei dem der Flugkörper auf das Ziel zufliegt, und den Abfangflugkörper mit einem Sucher auffasst, wobei der Flugkörper in einem Planungszyklus
a) eine Prädiktion einer möglichen Eigenflugbahn des Flugkörpers zum Ziel und eine mögliche Abfangflugbahn des Abfangflugkörpers mit einem Prädiktor erstellt,
b) ein Ausweichen des Flugkörpers vor dem Abfangflugkörper und eine Annäherung des Flugkörpers ans Ziel anhand des Prädiktors bestimmt und bewertet,
c) weitere Prädiktionen möglicher Eigenflugbahnen erstellt durch mehrfache Variationen von Steuergrößen des Flugkörpers, wobei der Flugkörper sein aus den Eigenflugbahnen resultierendes prädiziertes Ausweichen vor dem Abfangflugkörper und seine Annäherungen ans Ziel jeweils anhand von vorgegebenen Gütekriterien bewertet, wobei ein Gütekriterium ist, wie viel Treibstoff für das Triebwerk in einem Annäherungsgebiet des Flugkörpers an das Ziel rechnerisch noch übrig ist, und/oder ein Gütekriterium die Geschwindigkeit des Flugkörpers im Ziel ist, wobei ein Geschwindigkeitsquantum mit einer vorbestimmten Treibstoffmenge gleichgesetzt wird, wobei die Bewertung für diese Gütekriterien desto höher ist, je mehr Treibstoff vorhanden ist, und
d) anhand der Bewertungen aus den verschiedenen Eigenflugbahnen die Eigenflugbahn mit der besten Güte auswählt, und
ein erstes Teilstück dieser Eigenflugbahnen mit den dieser Eigenflugbahn zugrunde liegenden Steuergrößen zum Lenken des Flugkörpers abfliegt und den Planungszyklus mehrfach für nachfolgende Teilstücke wiederholt.

Die Erfindung geht von der Überlegung aus, dass übliche im Unterschall fliegende Seezielflugkörper kaum Probleme mit ihrem Treibstoffverbrauch haben. Auch Ausweichmanöver im Unterschallbereich kurz vor dem Ziel zum Ausweichen von Abwehrflugkörpern kosten nicht so viel Treibstoff, dass dies die Missionsplanung und Missionsdurchführung erheblich beeinflusst. Zum Bewältigen sehr großer Reichweiten im Bereich von 1.000 km und mehr sollte jedoch ein Überschallflug ausgeführt werden, zweckmäßigerweise mit mehr als 3 Mach. Bei diesen Geschwindigkeiten ist der Treibstoffverbrauch ein kritischer Parameter. Hinzu kommt, dass scharfe Ausweichmanöver auf den letzten Kilometern mit dieser Geschwindigkeit zwar deutlich effektiver aber sehr treibstoffintensiv sind, sodass eine Bekämpfung des Seeziels daran scheitern kann, dass der Flugkörper aufgrund Treibstoffmangels das Ziel nicht mehr erreicht, wenn sich das Seeziel effektiv verteidigt.

Schwer vorhersagbare Randbedingungen, wie das durch einen Abfangflugkörper erzwungene Ausweichen, erfordern eine hohe Robustheit der Flugplanung, auch wenn die Annahmen von der Realität abweichen. Die Robustheit kann durch die Anwendung der Model Predictive Control (MPC) (Modellprädiktive Regelung) auf die Lenkung des Flugkörpers erhöht werden. Bei der MPC kann ein dynamisches, zeitdiskretes Modell der Flugsteuerung verwendet werden, um die zukünftige Lenkung des Flugkörpers in Abhängigkeit von freien Steuerparametern zur Lenkung des Flugkörpers zu berechnen. Dies ermöglicht die Berechnung von Steuerparametern für eine treibstoffeffiziente Lenkung. Jede der vielen prädizierten Flugbahnen kann auf ihren voraussichtlichen Treibstoffverbrauch und auf andere Gütekriterien untersucht werden, die in einer Gütefunktion oder Kostenfunktion die Güte oder das Güteergebnis der Flugbahn bestimmen. Die Anwendung der MPC auf die Lenkung des Flugkörpers kann als Model Predictive Guidance (MPG) bezeichnet werden.

In die Model Predictive Guidance werden Eingangsgrößen des Flugkörpers zu dessen Lenkung eingegeben, wie Steuergrößen. Ganz neue Perspektiven eröffnen sich jedoch, wenn eine Eigenschaft eines Abfangflugkörpers als Eingangsgröße in der Model Predictive Guidance verwendet wird. Mit seinem Sucher, der insbesondere ein Radarsucher ist, kann der Flugkörper den anfliegenden Abfangflugkörper als solchen erfassen, also als Abfangflugkörper erkennen. Dann kann mit dem Beginn von Ausweichmanövern so lange gewartet werden, wie es möglich ist, um dem Abfangflugkörper noch erfolgreich auszuweichen. Zweckmäßigerweise wird der Abfangflugkörper vom Sucher verfolgt, sodass seine Abfangflugbahn erfasst wird. Diese kann dem Prädiktor zur Verfügung gestellt werden, sodass die Eigenflugbahn, also die Flugbahn des Flugkörpers, insbesondere im Ausweichflug, an die Abfangflugbahn angepasst werden kann.

Besonders vorteilhaft ist es, wenn eine mögliche, zukünftige Abfangflugbahn prädiziert wird. Zu einer solchen Erstellung der Abfangflugbahn werden Flugeigenschaften des Abfangflugkörpers mit berücksichtig, wie sein Gewicht, seine Geschwindigkeit und Lenkeigenschaften. Ist eine mögliche Abfangflugbahn bekannt, so können die vielen prädizierten Eigenflugbahnen optimiert und daraufhin bewertet werden, wie gut sie dem Abfangflugkörper ausweichen. Es kann dann diejenige Eigenflugbahn ausgewählt werden, die dem Abfangflugkörper ausreichend gut ausweicht, oder es wird diejenige Eigenflugbahn ausgesucht, die den besten Ausweichflug erzeugt.

Die Eingangsgrößen der Lenkung, die die Größen der Steuerparameter der Lenkung enthalten, also die Steuergrößen, können in einem mathematischen Deskriptor, dem Prädiktor, zusammengefasst werden. Der Prädiktor enthält also neben einer Funktion zur Berechnung der Flugbahnen auch die Steuergrößen der Lenkung des Flugkörpers. Mittels des Prädiktors lässt sich der Flug des Flugkörpers vorhersagen. Dieser vorausberechnete Flug muss am Anfang des Verfahrens nicht besonders gut sein, da die Steuergrößen variiert und im Laufe des Verfahrens verbessert werden. Hierdurch wird die Flugbahn zum Ziel, also in Richtung zum Ziel, inklusive Ausweichflug verbessert. Durch die Variation der Steuergrößen liegen - ausgehend vom gleichen Anfangspunkt der Berechnung, der der aktuelle Flugpunkt des Flugkörpers sein kann - mit dem Prädiktor mehrere verschiedene Eigenflugbahnen zum Ziel vor. Anhand von vorgegebenen Gütekriterien können die verschiedenen Eigenflugbahnen bewertet werden und die Eigenflugbahnen mit der besten Güte wird ausgewählt. Die dieser Eigenflugbahnen zugrunde liegenden Steuergrößen werden zum Lenken des Flugkörpers verwendet. Dieser Planungszyklus mit seinen vielen möglichen Eigenflugbahnen wird im Laufe des Flugs des Flugkörpers vielfach wiederholt, sodass der Flug nach jedem Teilstück des Flugs korrigiert werden kann.

Ein Durchlauf eines Planungszyklus kann die Schritte a) bis d) umfassen. Mehrere Durchläufe bilden einen Planungszyklus. Mehrere Planungszyklen können in einen MPG-Zyklus zusammengefasst werden. In einem Planungszyklus werden viele mögliche Eigenflugbahnen ausgehend vom aktuellen Flugpunkt berechnet und eine von ihnen wird ausgewählt und als Grundlage der Steuerung des Flugs des Flugkörpers verwendet. Der Planungszyklus wird im Laufe des Flugs wiederholt, sodass eine repetitive zeitliche Wiederholung der Variationen der Eigenflugbahn erfolgt, insbesondere von jeweils anderen aktuellen Flugpunkten des Flugkörpers. Das Variieren der berechneten Flugbahn bzw. der Steuergrößen des Prädiktors und das Aussuchen der geeignetsten Eigenflugbahn entspricht einem Optimierungsverfahren zur Optimierung der Flugkörperflugbahn. Es ist hierbei jedoch nicht notwendig, dass das Optimum der Flugbahn erreicht wird, denn bereits eine Verbesserung gegenüber einer anfänglichen Flugbahn oder ein temporäres Optimum, wie die temporär beste verfügbare Flugbahn, ist ausreichend.

In einem Planungszyklus beginnen die vielen Flugbahnen zweckmäßigerweise jeweils vom aktuellen Flugpunkt, der der reale, aktuelle Aufenthaltspunkt des Flugkörpers zu Beginn, während oder am Ende des Planungszyklus sein kann oder am Anfang oder Ende eines Teilstücks der Flugbahn liegen kann. Der Flugpunkt kann ein räumlicher, mathematischer Start eines Berechnungsvorgangs sein, wie ein theoretischer Ort des Flugkörpers, beispielsweise der Ausgangspunkt eines Vektors. Im Planungszyklus werden so mehrere Flugbahnen beginnend vom gleichen aktuellen Flugpunkt berechnet. Da die Berechnung etwas Zeit in Anspruch nimmt, währenddessen der Flugkörper durch den realen Raum fliegt, der Startpunkt der Bahnen jedoch identisch sein sollte, muss der theoretische Aufenthaltsort des Flugkörpers bzw. der mathematische Start der Berechnung nicht exakt im realen aktuellen Aufenthaltsort des Flugkörpers liegen. Er kann generell ein rechnerischer Ort sein, insbesondere wenn gemessene Koordinaten des Flugkörpers nicht verfügbar sind. Neben dem Ort kann der aktuelle Flugpunkt auch die aktuelle Flugrichtung, die aktuelle Fluggeschwindigkeit und/oder aktuelle Beschleunigung bzw. den Vorschub des Flugkörpers enthalten.

Der Prädiktor kann eine oder mehrere Funktionen und mathematische Größen enthalten, wie Skalare, Vektoren, und/oder andere Daten, die eine Flugbahn mathematisch beschreiben. Der Prädiktor kann eine Anzahl von Differentialgleichungen enthalten, die beispielsweise numerisch mittels Runge-Kutta-Integration gelöst werden. Der Prädiktor kann auch einen inertialen Zustand, wie den aktuellen Flugpunkt, enthalten, sodass eine Flugbahn ausgehend vom inertialen Zustand anhand der Größen mathematisch beschrieben wird. Der inertiale Zustand muss jedoch nicht Bestandteil des Prädiktors sein, sondern kann auch zusätzlich herangezogen werden zur Beschreibung der Bahn. Die Größen können Steuergrößen, also Größen von Steuerparametern des Flugkörpers sein. Die Steuerparameter sind zweckmäßigerweise Parameter, die einen Einfluss auf den Flug des Flugkörpers haben und steuerbar sind, wie Querbeschleunigungen in zwei zweckmäßigerweise orthogonale Raumrichtungen und insbesondere auch ein Vorschub des Triebwerks. Die Steuerparameter an sich können in der Variation gleich bleiben, nur ihre Steuergrößen, wie Werte, Vektoren oder Matrizen werden verändert.

Der Prädiktor beschreibt auch eine angenommene Abfangflugbahn, sodass er beide Flugbahnen beschreibt. Auf diese Weise kann eine Annäherung der beiden Flugkörper aneinander präzise berechnet werden. Die Abfangflugbahn kann während der vom aktuellen Flugpunkt ausgehenden Variation der Eigenflugbahnen gleichbleiben, sodass innerhalb des Planungszyklus mehrere Eigenflugbahnen mit jeweils einer gleichbleibenden Abfangflugbahn entstehen. Im Laufe des realen Flugs des Flugkörpers kann jedoch die angenommene Abfangflugbahn variieren, sodass sich beispielsweise von Flugpunkt zu Flugpunkt bzw. von Teilstück zu Teilstück die Daten der angenommen Abfangflugbahn verändern können, z.B. entsprechend neuer Daten des Abfangflugkörpers, die vom Sucher ermittelt wurden. Im Übrigen können alle zur Prädizierung der Eigenflugbahn beschriebenen Details auch auf die Prädizierung der Abfangflugbahn angewendet werden.

Die Bewertung führt zu einem Güteergebnis, wie einem Gütevektor, einem Gütewert oder einer Gütefunktion. Die Gütekriterien können in einer Gütefunktion oder Kostenfunktion zusammengefasst werden, sodass den mehreren Gütekriterien verschiedene Gewichtungen in der Kostenfunktion gegeben werden können. Anhand der Kostenfunktion mit ihren mehreren Gütekriterien kann unter Verwendung der Eigenflugbahn ein Güteergebnis bzw. eine Güte berechnet werden. Diese dient der Auswahl der Eigenflugbahn, beispielsweise der mit dem besten Güteergebnis. Das kann die Eigenflugbahn mit den geringsten Kosten sein, wobei Kosten bzw. Güteergebnis durch die Kostenfunktion bestimmt werden. Diese Flugbahn kann nun entlang eines ersten bzw. nächstfolgenden Teilstücks abgeflogen werden. Das bedeutet, dass die Steuergrößen des Prädiktors dieser Eigenflugbahn zur Lenkung des Flugkörpers verwendet werden, zumindest dieses Teilstück weit.

Der Flugkörper ist zweckmäßigerweise ein unbemannter Flugkörper, wie ein Remote Carrier mit Rädern zum Schutz eines Flugzeugs oder ohne Rädern zum Bekämpfen eines Ziels oder ein Seezielflugkörper zum Bekämpfen eines als Seeziel oder als landgestütztes Bodenziel ausgeführten Ziels. Sein Triebwerk ist im Schub steuerbar und kann ein Luft atmendes Triebwerk sein. Möglich ist auch ein im Schub steuerbares Festbrennstofftriebwerk, beispielsweise ein Ramjet. Der Treibstoff des Flugkörpers kann Flüssigtreibstoff oder Festbrennstoff sein. Der Flugkörper ist zweckmäßigerweise ein Überschallflugkörper, insbesondere ein Überschallseezielflugkörper. Er ist vorteilhafterweise für Fluggeschwindigkeiten über 3 Mach, insbesondere über 3,5 Mach, ausgeführt. Der Flugkörper verfügt zweckmäßigerweise über die Fähigkeit zum Flug in Flughöhen über 15 km, insbesondere über 20 km, und hat insbesondere eine Reichweite von über 1.000 km. Der Sucher des Flugkörpers kann einen IR-Kanal und/oder einen Radarkanal aufweisen. Mit Radarkanal umfasst er zweckmäßigerweise ein aktives Radar. Der Sucher ist dazu ausgeführt, sowohl das Ziel als auch zeitgleich bzw. im Wechsel einen oder mehrere Abfangflugkörper verfolgen zu können. Sucher und Steuereinheit sollten hierbei so aufeinander abgestimmt sein, dass die geflogene Flugbahn des Abfangflugkörpers als solche jedenfalls über ein Teilstück bestimmt werden kann.

Der Flug des Flugkörpers kann in eine Startphase, eine Midcourse-Phase und ein Endgame unterteilt sein. Die Midcourse-Phase beginnt nach der Startphase, in der der Flugkörper startet und grob in Richtung zum Ziel lenkt. Das Ende der Midcourse-Phase und damit der Beginn des Endgame kann auf unterschiedliche Weise erfolgen. Mit einem Aufschalten eines Suchers des Flugkörpers auf das Ziel. Oder durch das Erreichen eines Bekämpfungsgebiets, in dem eine aktive Bekämpfung durch das Ziel erwartet wird oder möglich ist, also das Gebiet, in dem der Flugkörper einem Treffer vom Ziel aus ausgesetzt sein kann und in dem infolgedessen Ausweichbewegungen nötig sind. Die beschriebene Flugkörperlenkung findet zweckmäßigerweise im Endgame statt.

In einer vorteilhaften Ausführungsform der Erfindung wird der Abfangflugkörper vom Flugkörper vermessen, also mittels seines Suchers verfolgt, wobei die bereits verfolgte Abfangflugbahn bei der Erstellung der möglichen Abfangflugbahn berücksichtigt wird. Die Verfolgung kann in einem Zusammenwirken von Sucher und Steuereinheit erfolgen. Aus der bereits verfolgten Abfangflugbahn kann auf die zukünftige, zu prädizierende Abfangflugbahn rückgeschlossen werden, wodurch die Prädiktion verbessert werden kann. Die Abfangflugbahn bzw. deren Steuergrößen können Bestandteil des Prädiktors sein.

Ein Abfangflugkörper dient dazu, den Flugkörper anzufliegen und zu bekämpfen. Hierzu verfolgt der Abfangflugkörper den Flugkörper und reagiert infolgedessen auf dessen Flugbewegungen. Es kann daher zur Prädiktion der Abfangflugbahn angenommen werden, dass die Abfangflugbahn eine Reaktion auf die Eigenflugbahn ist. Durch ein Abschätzen der Reaktion kann die Prädiktion Abfangflugbahn verbessert werden.

Im Planungszyklus werden eine Vielzahl von Eigenflugbahnen erzeugt. Jede Eigenflugbahn wird auf ihr Ausweichen des Flugkörpers vor dem Abfangflugkörper bewertet, also wie gut der Flugkörper dem Abfangflugkörper ausweicht. Wenn jedoch der Abfangflugkörper auf die Eigenflugbahn reagiert und seinen Flug daran anpasst, so wird sich auch die Abfangflugbahn mit jeder Veränderung der Eigenflugbahn ebenfalls verändern. Es ist daher vorteilhaft, wenn zu jeder weiteren Prädiktion einer Eigenflugbahn eine korrespondierende Abfangflugbahn erstellt wird. Nun kann das Bewerten des Ausweichens beide Flugbahnen mit einbeziehen, also immer ein korrespondierendes Flugbahnpaar, wobei z.B. der naheste Abstand der beiden Flugkörper bewertet werden kann.

Je mehr über die Art der Reaktion der Abfangflugbahn auf die Eigenflugbahn bekannt ist, desto exakter kann das Prädizieren der Abfangflugbahn erfolgen. Am exaktesten kann die Prädiktion der Abfangflugbahn erfolgen, wenn angenommen wird, dass die Abfangflugbahn eine Reaktion in Form eines Lenkgesetzes auf die Eigenflugbahn ist. Es kann angenommen werden, dass die prädizierte Abfangflugbahn unter Verwendung eines automatischen Lenkgesetzes des Abfangflugkörpers als Reaktion auf die Eigenflugbahn berechnet werden kann. Welches Lenkgesetz bei der Prädiktion Verwendung findet, kann vom Typ des Abfangflugkörpers, vom Typ seines Waffensystems und/oder von der aktuellen Kampfsituation abhängig gemacht werden. Eine Möglichkeit besteht darin, dass das Lenkgesetz die Proportionalnavigation ist. Es kann dann die mögliche Abfangflugbahn unter der Bedingung berechnet werden, dass der Abfangflugkörper mit Proportionalnavigation auf die Eigenflugbahn, also den Flug des Flugkörpers, reagiert.

Um das Ausweichen zu berechnen und zu bewerten, müssen beide Flugbahnen, also die Eigenflugbahn des Flugkörpers und die Abfangflugbahn des Abfangflugkörpers in Beziehung gesetzt werden, sodass die naheste Annäherung der beiden Flugkörper im Vorbeiflug bestimmt werden kann. Wenn der Abfangflugkörper auf die Eigenflugbahn reagiert, ist es vorteilhaft, wenn erst zumindest ein Abschnitt der Eigenflugbahn berechnet wird und dann ein auf diesen Abschnitt reagierender Abschnitt der Abfangflugbahn als Reaktion auf die Eigenflugbahn. Durch das Verfahren der Model Predictive Guidance, kann diese Abfolge der Berechnung wie in der Realität des Abfangens auch in der Prädiktion schrittweise erfolgen. In der Realität reagiert der Abfangflugkörper auf die kurz in der Vergangenheit liegenden Beschleunigungen des Flugkörpers mit eigenen Beschleunigungen. Dieser Ablauf kann mit den einzelnen Prädiktionsschritten der Model Predictive Guidance nachgebildet werden. Es kann, muss jedoch nicht zuerst die gesamte Eigenflugbahn berechnet werden, sondern es reicht aus, einen Prädiktionsschritt der Eigenflugbahn zu berechnen und darauf folgend einen reaktiven Prädiktionsschritt der Abfangflugbahn, sodass beide Flugbahnen Schritt für Schritt sukzessive aufgebaut werden.

Ist der Begegnungspunkt der beiden Flugkörper erreicht, also der Punkt der nahesten Annäherung der beiden Flugkörper, so kann die Prädiktion der Abfangflugbahn beendet werden und das Prädiktionsverfahren alleinig mit der Prädiktion der Eigenflugbahn fortgesetzt werden.

Ist bekannt, dass der Flugkörper seine Eigenflugbahn auf einem Lenkgesetz des Abfangflugkörpers aufbaut, um ihm auszuweichen, wäre eine mögliche Maßnahme vonseiten des Ziels bzw. des Abfangflugkörpers, das der Abfangflugbahn zugrundeliegende Lenkgesetz zu verbergen. Beispielsweise kann er das Lenkgesetz im Flug verändern oder wechseln. Insbesondere bei einem konzertierten Angriff des Flugkörpers durch mehrere Abfangflugkörper kann jeder der Abfangflugkörper ein anderes Lenkgesetz verwenden, um das Ausweichen zu vereiteln. Dieser Situation kann der Flugkörper begegnen, indem die vom Sucher erfasste Abfangflugbahn mit der zuvor prädizierten Abfangflugbahn verglichen wird und bestimmt wird, ob die Abfangflugbahn einem angenommenen Lenkgesetz folgt.

Bei mehreren möglichen Lenkgesetzen ist nicht im Voraus klar, welches Lenkgesetz der Abfangflugkörper anwendet. Ermittelt der Flugkörper, dass die vom Sucher erfasste Abfangflugbahn vermutlich nicht einem angenommenen Beschleunigungsverhalten folgt, so kann ein anderes Lenkgesetz als Teil des prädizierten Beschleunigungsverhaltens zur Prädiktion der möglichen Flugbahn des Abfangflugkörpers ausgewählt werden. Das Beschleunigungsverhalten kann einen Schubverlauf, insbesondere ein Erlöschen des Triebwerks des Abfangflugkörpers, ein Widerstandsverhalten und ein vom Abfangflugkörper angewendetes Lenkgesetz umfassen. Die Prüfung kann wiederholt werden, um festzustellen, ob die reale Abfangflugbahn und das prädizierte Beschleunigungsverhalten nun korrespondieren. Ist dies wieder nicht der Fall, so kann ein weiteres Beschleunigungsverhalten mit einem anderen Lenkgesetz geprüft werden, und so weiter.

Während bekannte Seezielflugkörper im Endgame wedeln, also periodisch wiederkehrende gleiche Beschleunigungen ausführen, ist es einem Ausweichen förderlicher, wenn zumindest eine Querbeschleunigung des Ausweichmanövers mit abnehmender Flugzeit zum Abfangflugkörper insbesondere stetig erhöht wird. Es kann insbesondere die Amplitude und die Frequenz des Ausweichmanövers stetig erhöht werden. Auf diese Weise kann kurz vor der Begegnung mit hoher Querbeschleunigung ausgewichen werden, ohne durch oft wiederholtes hohes Beschleunigen zu viel Treibstoff bzw. Geschwindigkeit zu verlieren. Unter den Querbeschleunigungen können Beschleunigungen quer zur Flugrichtung des Flugkörpers verstanden werden, also zur Seite und nach oben und unten.

Um ein erfolgreiches Ausweichen durch eine Bewertung ermitteln zu können, ist es vorteilhaft, wenn die naheste Annäherung des Abfangflugkörpers an den Flugkörper bestimmt wird und in die Bewertung mit eingeht. Hierbei kann ein einzuhaltender Minimalabstand gesetzt werden, der nicht unterschritten werden darf, um einer Bekämpfung widerstehen zu können. Ein Minimalabstand kann im Bereich zwischen 5 m und 20 m liegen, insbesondere bei 10 m + - 3 m. Die Bewertung des Ausweichens kann durch die Berechnung der Ablage erfolgen, also die naheste Annäherung der beiden Flugkörper aneinander. Je größer die Ablage ist, desto besser ist die Bewertung. Vorteilhafterweise wird die Ablage exponentiell bewertet, wobei mit kleiner werdender Ablage die Kosten, also eine negative Bewertung, exponentiell ansteigen.

Es wird die Eigenflugbahn auch insofern bewertet, dass eine Annäherung des Flugkörpers ans Ziel bewertet wird. Die Annäherung kann einen oder mehrere der folgenden Bewertungsparameter umfassen:
- Eine Zielablage, also wie genau der Flugkörper das Ziel trifft.
- Eine Richtung, aus der der Flugkörper im Ziel eintrifft.
- Eine Zeit bzw. Uhrzeit, wann der Flugkörper im Ziel eintrifft.
- Eine Flugzeit bis zum Eintreffen im Ziel.
- Ein Resttreibstoff im Ziel oder einem vorbestimmten Ort davor.
- Eine Restgeschwindigkeit im Ziel oder einem vorbestimmten Ort davor, wobei in der Bewertung ein Geschwindigkeitsquantum gleichgesetzt werden kann mit einer vorbestimmten Treibstoffmenge, da Geschwindigkeitsquantum und Treibstoffmenge äquivalent sein können.

Bekannte Seezielflugkörper wedeln mit Beginn des Endgame oder über eine vorbestimmte Strecke vor dem Ziel. Das ist mit einem hohen Treibstoffverbrauch verbunden. Treibstoff kann eingespart werden, wenn ein Ausweichen erst erfolgt, wenn der Abfangflugkörper vom Sucher erfasst wurde.

Ebenfalls vorteilhaft ist es, wenn vor einem Auffassen des Abfangflugkörpers durch den Sucher ein Ausweichmanöver unterbleibt. Hierdurch kann Treibstoff in erheblichem Umfang eingespart werden. Auch ein Einbeziehen des Abfangflugkörpers in den Prädiktor kann unterbleiben. Hierdurch kann Rechenzeit eingespart werden. Um den Abfangflugkörper zuverlässig und mit vergleichsweise wenig Aufwand früh zu erkennen, kann ein Radar des Ziels, wie ein Schiffsradar, überwacht werden. So lange das Ziel den Flugkörper nicht erkannt hat, ist nicht mit einem Abfangflugkörper zu rechnen. Ist der Flugkörper jedoch von einem Zielradar erfasst, so kann damit ein Triggern eines Suchens des Abfangflugkörpers erfolgen.

Bei einem konzertierten Angriff auf den Flugkörper fliegen mehrere Abfangflugkörper auf den Flugkörper zu, um diesen abzufangen. In einem solchen Fall ist es zweckmäßig, wenn der Sucher mehrere Abfangflugkörper auffasst und von jedem der Abfangflugkörper eine mögliche zukünftige Abfangflugbahn mittels Prädiktor prädiziert. Das Ausweichen vor dem kollektiven Angriff kann bewertet werden, indem in die Bewertung jeweils eine zukünftige naheste Annäherung des Flugkörpers zu jedem der Abfangflugkörper eingeht. Im Übrigen kann das Verfahren mit seinen Details allgemein auf das Ausweichen vor mehreren Abfangflugkörpern angewendet werden.

Wie oben beschrieben, können die mehreren Abfangflugkörper unterschiedliche Lenkgesetze anwenden, um zu einem größtmöglichen Abfangerfolg zu kommen. Dann ist es vorteilhaft, wenn der Sucher mehrere Abfangflugkörper auffasst und zur Erstellung der möglichen zukünftigen Abfangflugbahnen den Abfangflugkörpern unterschiedliche Beschleunigungsverhalten, insbesondere unterschiedliche Lenkgesetze, zugeordnet werden. Zuvor können die Abfangflugbahnen auf verschiedene Beschleunigungsverhalten bzw. Lenkgesetze untersucht werden, um den Abfangflugkörpern die richtigen Beschleunigungsverhalten zuzuordnen.

Im Folgenden wird die Prädiktion der Eigenflugbahn und der Abfangflugbahn näher beschrieben. Die Prädiktionen eines Planungszyklus unterscheiden sich vorteilhafterweise durch unterschiedliche Steuergrößen der gleichen Steuerparameter voneinander. Die Steuerparameter an sich können über den gesamten Planungszyklus gleich bleiben, insbesondere über den gesamten Flug. Jede einzelne der mehreren prädizierten Flugbahnen sowohl des Flugkörpers als auch des Abfangflugkörpers wird zweckmäßigerweise in einem Prädiktionszyklus aus vielen Rechenschritten berechnet. Die Flugbahnen des Flugkörpers und des Abfangflugkörpers werden im Folgenden gleichermaßen betrachtet. Jeder Rechenschritt kann die Integration von einer oder mehreren Differentialgleichungen umfassen. Die Flugbahn kann in viele Prädiktionsabschnitte unterteilt sein, die jeweils mit einem Rechenschritt oder Prädiktionsschritt berechnet werden. Eine Berechnung einer Flugbahn des Flugkörpers kann insofern in mehreren Prädiktionsschritten in einem Prädiktionszyklus erfolgen, wobei eine Flugbahn in einem Prädiktionszyklus berechnet wird.

Der Planungszyklus ist dem Prädiktionszyklus übergeordnet und enthält eine Vielzahl von Prädiktionszyklen. Dem Planungszyklus kann wiederum ein MPG-Zyklus (Model Predictive Guidance) übergeordnet sein, der eine Vielzahl von Planungszyklen enthält. Mit den Daten eines Planungszyklus wird ein Teilstück der realen Flugbahn abgeflogen, wobei die reale Flugbahn in viele Teilstücke unterteilt ist, zu denen jeweils ein Planungszyklus stattfindet. Die übergeordnete Variation der Flugbahn kann insofern in drei ineinander liegenden Rechenzyklen erfolgen:
- der Berechnung einer Flugbahn in mehreren Prädiktionsschritten in einem Prädiktionszyklus,
- die Berechnung mehrerer Flugbahnen in einem Planungszyklus und
- die Wiederholung der Planungszyklen für mehrere Teilstücke entlang der realen Flugbahn in einem MPG-Zyklus.

Hierbei kann der MPG-Zyklus innerhalb des Endgame liegen und insbesondere vom Beginn des Endgame bis zum Ende Ziel reichen.

Es ist die real abgeflogene Flugbahn von der berechneten Flugbahn zu unterscheiden. Die reale Flugbahn ist in mehrere Teilstücke unterteilt, die sich jeweils über eine räumliche Länge erstrecken. Die Teilstücke müssen nicht gleich lang sein, sondern können sich an äußeren Gegebenheiten ausrichten, wie dem Eingang von neuen Daten über das Verhalten des Abfangflugkörpers. Zu jedem Teilstück wird ein Planungszyklus ausgeführt, der eine zeitliche Dauer der Berechnung darstellt. Er kann so lang sein wie das Abfliegen eines Teilstücks oder auch kürzer. Innerhalb eines Planungszyklus oder Teilstücks liegen viele Lenkzyklen, also Berechnungen der Lenkkommandos aus der vorgegebenen, konstanten Flugbahn des aktuellen Planungszyklus. In einem Planungszyklus liegen beispielsweise 100 Lenkzyklen. Noch kürzer können Flugreglerzyklen zur Ansteuerung der Lenkflügel sein, sodass ein Lenkzyklus viele Flugreglerzyklen enthält.

Eine berechnete Flugbahn kann in mehrere Abschnitte oder Lenkabschnitte unterteilt sein. Der Prädiktor enthält somit zweckmäßigerweise zu jedem der Abschnitte einen Satz an Steuergrößen, wobei jeder Satz zumindest eine Steuergröße zu jedem Steuerparameter des Prädiktors enthält. Die Abschnitte können in eine Vielzahl von Prädiktionsschritten unterteilt sein. Diese können Integrationsabschnitte mit der Länge einer Prädiktionsschrittweite sein.

Die Prädiktionsschritte gehorchen vorteilhafterweise einer oder mehreren der folgenden Bedingungen:
- Innerhalb eines jeden Prädiktionsschritts sollte die Beschleunigung gleich sein. Bei allen Änderungen der Beschleunigung sollte ein Prädiktionsschritt enden und ein neuer beginnen.
- Bei mehreren Lenkabschnitten sollte an jedem Abschnittsende auch der laufende Prädiktionsschritt enden.
- Die Prädiktionsschritte können verkürzt werden, wenn die Beschleunigung des Ziels über einen Grenzwert ansteigt.
- Die Prädiktionsschritte können in Abhängigkeit von der noch verbleibenden Flugzeit oder der Entfernung zum Ziel verkürzt werden, um beispielsweise zum Ende des Flugs hin oder vor der Begegnung mit dem Abfangflugkörper präziser zu fliegen.

Ein Planungszyklus kann beendet werden, wenn eine Flugbahn des Flugkörpers gefunden ist, die eine ausreichende Güte aufweist, sodass die Mission des Flugkörpers genügend aussichtsreich erfolgreich durchgeführt werden kann. Das kann der Fall sein, wenn die Bewertungen einen vorbestimmten Schwellwert erreicht. Es gibt jedoch auch andere sinnvolle Abbruchkriterien, sodass es vorteilhaft ist, wenn ein Planungszyklus beendet wird, wenn zumindest eines der folgenden Kriterien erreicht wird:
- Zumindest eine der Bewertungen erreicht einen vorbestimmten Schwellwert.
- Die Bewertungen laufen gegen eine Konstante. Dann ist absehbar, dass die weitere Variation der Flugbahnen nicht zu wesentlich besseren Bewertungen führt, sodass sie abgebrochen werden kann.
- Bei der Variation der Steuergrößen fällt der Raumabstand der Steuergrößen im Parameterraum unter einen vorbestimmten Grenzwert. Es ist dann absehbar, dass sich die Steuergrößen bei einer weiteren Variation der Flugbahnen nicht mehr sehr verändern werden, sodass die Prädizierungen abgebrochen werden können.
- Eine Maximalanzahl an Bahnen wurde berechnet, vor allem ohne dass die Bewertung einer Flugbahn ausreichend wurde. Es kann vorkommen, dass keine gute Flugbahn ermittelbar ist. Dann ist es besser, die Prädizierungen abzubrechen und von einem anderen Ausgangspunkt neu zu beginnen, als die aussichtsarme Variation der Flugbahnen länger fortzusetzen.

Nach einem Abschluss eines Planungszyklus wird ein neuer Planungszyklus entweder unmittelbar oder nach Ablauf eines Wartekriteriums begonnen. Dieser neue Planungszyklus kann als Startwerte für die Prädiktion die Steuergrößen der letzten verwendeten Flugbahn verwenden. Für den Beginn eines Planungszyklus können eines oder mehrere der folgenden Kriterien gelten:
- Der letzte Planungszyklus ist abgeschlossen.
- Ein vorbestimmter Zeitpunkt ist erreicht, beispielsweise wenn eine vorgegebene Wartezeit vergangen ist oder ein vorgegebener absoluter Zeitpunkt erreicht ist.
- Es liegen neue Daten zum Abfangflugkörper vor. Wenn der Abfangflugkörper sich anders verhalten hat, als im vergangenen Planungszyklus angenommen wurde, ist es sinnvoll, die Flugbahn zügig an das neue Verhalten anzupassen. Hierfür kann ein Planungszyklus begonnen werden, der die neuen Zieldaten berücksichtigt. Gegebenenfalls kann ein noch laufender Planungszyklus abgebrochen werden, damit die neuen Daten zügig verarbeitet werden.

Die auf den Flugkörper gerichtete Aufgabe wird gelöst durch einen Flugkörper zum Bekämpfen eines Ziels mit einem Triebwerk und einer Steuereinheit, die dazu vorbereitet ist, einen Flug zum Ziel zu lenken, und einem Sucher zum Auffassen eines Abfangflugkörpers gemäß den Merkmalen von Patentanspruch 14, wobei die Steuereinheit dazu vorbereitet ist, in einem Planungszyklus
a) eine Prädiktion einer möglichen Eigenflugbahn des Flugkörpers zum Ziel und eine mögliche Abfangflugbahn des Abfangflugkörpers mit einem Prädiktor zu erstellen,
b) ein Ausweichen des Flugkörpers vor dem Abfangflugkörper und eine Annäherung des Flugkörpers ans Ziel anhand des Prädiktors zu bestimmen und zu bewerten,
c) weitere Prädiktionen möglicher Eigenflugbahnen zu erstellen durch mehrfache Variationen von Steuergrößen des Flugkörpers, wobei das resultierende Ausweichen des Flugkörpers vor dem Abfangflugkörper und die Annäherungen des Flugkörpers ans Ziel jeweils anhand von vorgegebenen Gütekriterien bewertet werden, wobei ein Gütekriterium ist, wie viel Treibstoff für das Triebwerk in einem Annäherungsgebiet des Flugkörpers an das Ziel rechnerisch noch übrig ist, und/oder ein Gütekriterium die Geschwindigkeit des Flugkörpers im Ziel ist, wobei ein Geschwindigkeitsquantum mit einer vorbestimmten Treibstoffmenge gleichgesetzt wird, wobei die Bewertung für diese Gütekriterien desto höher ist, je mehr Treibstoff vorhanden ist, und
d) anhand der Bewertungen aus den verschiedenen Eigenflugbahnen die Eigenflugbahn mit der besten Güte auszuwählen,
sowie eine Lenkung zum Fliegen entlang eines ersten Teilstücks dieser Eigenflugbahn mit den dieser Eigenflugbahn zugrunde liegenden Steuergrößen zum Lenken des Flugkörpers zu steuern, und den Planungszyklus mehrfach für nachfolgende Teilstücke zu wiederholen.

Die bisher gegebene Beschreibung vorteilhafter Ausgestaltungen der Erfindung enthält zahlreiche Merkmale, die teilweise in einigen abhängigen Ansprüchen zu mehreren zusammengefasst wiedergegeben sind. Die Merkmale können jedoch zweckmäßigerweise auch einzeln betrachtet und zu sinnvollen weiteren Kombinationen zusammengefasst werden, insbesondere bei Rückbezügen von Ansprüchen, sodass ein einzelnes Merkmal eines abhängigen Anspruchs mit einem einzelnen, mehreren oder allen Merkmalen eines anderen abhängigen Anspruchs kombinierbar ist. Außerdem sind diese Merkmale jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaften der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung sowie die Art und Weise, wie diese erreicht werden, werden klarer und deutlicher verständlich in Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: eine Annäherung eines Seezielflugkörpers an ein zu bekämpfendes Ziel, das den Seezielflugkörper per Radar ortet,
- FIG 2: einen vom Ziel gestarteten Abfangflugkörper, der von einem Radar des Seezielflugkörpers verfolgt wird,
- FIG 3: ein Ausweichmanöver des Seezielflugkörpers,
- FIG 4: ein Flussdiagram eines Verfahrens zur Bestimmung einer Ausweichflugbahn des Seezielflugkörpers zum Ziel,
- FIG 5: Ausschnitte aus Flugbahnen des Seezielflugkörpers und des Abfangflugkörpers und
- FIG 6: ein Diagramm mit Querbeschleunigungen des Seezielflugkörpers.

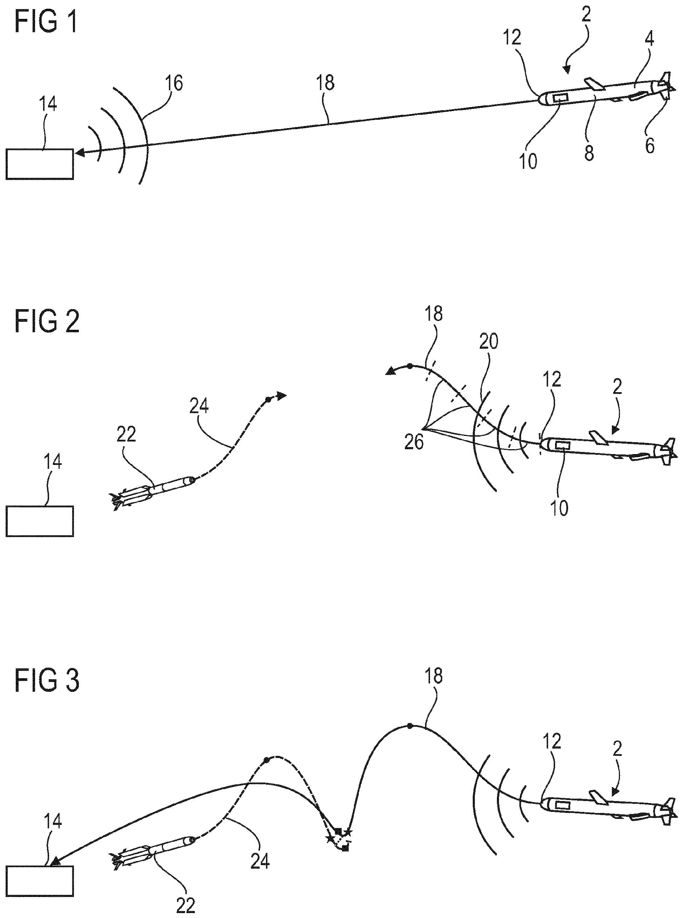

FIG 1 zeigt einen Flugkörper 2 in Form eines Seezielflugkörpers mit einem im Schub steuerbaren Ramjet-Triebwerk 4, Lenkflügeln 6, einem Wirkkörper 8, einer Steuereinheit 10 und einem Sucher 12. Der Flugkörper 2 befindet sich in einem Endgame auf dem Weg zu einem Ziel 14, das er bekämpfen soll. Das Ziel 14 ist ein Wasser- oder Landfahrzeug, das den Flugkörper 2 bereits mit seiner Radarstrahlung 16 erfasst und mit der Vorbereitung seiner Verteidigung begonnen hat. Der Sucher 12 ist mit einem Radarkanal ausgestattet und umfasst ein aktives Radar, sodass er über den Radarkanal das Ziel 14 sowohl passiv als auch aktiv erfassen kann. Der Sucher 12 kann alternativ oder zusätzlich einen IR-Kanal aufweisen und beispielsweise alle im Folgenden dem Radarkanal zugewiesenen Aktivitäten mit dem IR-Kanal ausführen. Der Sucher 12 des Flugkörpers 2 hat die Radarstrahlung 16 des Ziels 14 detektiert und das Ziel 14 als solches erfasst. Zudem hat der Sucher 12 - ggf. in Verbindung mit der Steuereinheit 10 - anhand der Radarstrahlung erkannt, dass es in naher Zukunft vermutlich bekämpft wird.

Obwohl der Flugkörper 2 sich bereits innerhalb eines Bekämpfungsgebiets zum Ziel 14 befindet, das sich auf einer Fläche von 20 km Entfernung um das Ziel 14 herum erstreckt, führt er keine Ausweichbewegungen aus, da er noch keinen Abfangflugkörper detektiert hat und insofern noch Treibstoff sparend fliegen kann, und fliegt geradewegs auf das Ziel 14 zu. Da der Flugkörper 2 im letzten geflogenen Flugabschnitt auf einer mittels Model Predictive Guidance (MPG) berechneten Eigenflugbahn 18 im Sea-Skimming unterwegs war, also unmittelbar über den Wellenkämmen des Meeres geflogen ist, setzt er diesen Flug weitgehend unverändert fort. Allerdings hat sich der Sucher 12 auf die Radarstrahlung 16 des Ziels 14 aufgeschaltet und verfolgt das Ziel 14 nun selbständig, sodass die Fluglenkung, beispielsweise mittels Model Predictive Guidance, aus der Midcourse-Phase des Flugs zum Ziel 14 nun beendet wurde und der Flugkörper 2 im Endgame fliegt, also mittels Daten vom Sucher 12 gelenkt wird. Alternativ oder zusätzlich ist es möglich, dass der Sucher 12 sein aktives Radar 20 aktiviert hat und das Ziel 14 nun aktiv erfasst, wie es in FIG 2 dargestellt ist. Das aktive Radar 20 hat der Sucher 12 erst aktiviert, nachdem es die Radarstrahlung 16 erkannt und ermittelt hat, dass diese vom Ziel 14 stammt und der Flugkörper 2 nun vom Ziel 14 erfasst wurde.

Der Flugkörper 2 fliegt mit einer Geschwindigkeit von über 2,5 Mach auf das Ziel 14 zu, beispielsweise mit 3 bis 3,5 Mach. Etwa 5 Sekunden nach dem Eintritt des Flugkörpers 2 in das Bekämpfungsgebiet, in dem das Ziel 14 den Flugkörper 2 bekämpfen könnte, also verhältnismäßig spät, startet vom Ziel 14 ein hochagiler Abfangflugkörper 22 und nimmt Kurs auf den Flugkörper 2. Dies ist in FIG 2 dargestellt. Durch den späten Start hat der Abfangflugkörper 22 bis zu seiner Begegnung mit dem Flugkörper 2 Schub von seinem Triebwerk, sodass er den Flugkörper 2 mit maximaler Geschwindigkeit und Agilität abfangen kann. Mit einem bekannten Wedeln würde der Flugkörper 2 dem Abfangflugkörper 22 nur bei extrem starken Querbeschleunigungen verbunden mit sehr hohem Treibstoffverbrauch entkommen können.

Der Suchers 12 hat den gegnerischen Abfangflugkörper 22 erfasst und verfolgt diesen. Sein aktives Radar verwendet der Sucher 12 nur, wenn der Abfangflugkörper 22 selbst kein aktives Radar verwendet. Mit dem Erfassen des Abfangflugkörpers 22 startet die Steuereinheit 10 ein MPG-Verfahren zum Ausweichen vor dem Abfangflugkörper 22 und berechnet eine Eigenflugbahn 18, die dem Abfangflugkörper 22 ausweicht, wie in FIG 2 dargestellt ist. Die Steuereinheit 10 steuert die Lenkung und damit die Lenkflügel 6 so an, dass der Flugkörper 2 entlang dieser Eigenflugbahn 18 fliegt.

Die Steuereinheit 10 berechnet mittels des MPG-Verfahrens auch die voraussichtliche Abfangflugbahn 24 des Abfangflugkörpers 22. Als Ausgangsdaten nimmt sie die Position und den Geschwindigkeitsvektor des Abfangflugkörpers 22, die aus den Daten des Radars 20 und den eigenen Positions- und Geschwindigkeitsdaten von der Steuereinheit 10 ermittelt wurden. Als Steuergrößen des Abfangflugkörpers 22 nimmt die Steuereinheit 10 diejenigen Steuergrößen der freien Steuerparameter der Quer- und Längsbeschleunigung an, die bei einem vorbekannten Lenkgesetz des Abfangflugkörpers 22 in Reaktion auf die Eigenflugbahn 18 gesteuert werden würden. Die Berechnung der Eigenflugbahn 18 des Flugkörpers und der Abfangflugbahn 24 des Abfangflugkörpers 22 kann jeweils einzeln oder in Relation zueinander erfolgen, sodass eine Relativflugbahn entsteht. Beide Methoden werden als äquivalent betrachtet und im Folgenden nicht weiter unterschieden.

Zudem verfolgt die Steuereinheit 10 in Verbindung mit dem Sucher 12 die reale Abfangflugbahn 24 des Abfangflugkörpers 22 und vergleicht diese mit der mittels MPG berechneten Abfangflugbahn 24 des Abfangflugkörpers 22. Aus diesem Vergleich bestimmt die Steuereinheit 10, ob sich der Abfangflugkörper 22 so verhält, wie anhand der Abfangflugbahn 24 vom MPG-Verfahren prädiziert wurde. Ist dies der Fall, wird das eigene Beschleunigungsverhalten, bestehend aus Schub, Widerstand und Lenkgesetz zur weiteren Prädizierung der Abfangflugbahn 24 beibehalten. Ergibt der Vergleich jedoch, dass sich der Abfangflugkörper 22 bzw. dessen Abfangflugbahn 24 anders verhalten, als bislang mittels MPG und Lenkgesetz prädiziert, so wechselt die Steuereinheit auf ein anderes angenommenes Beschleunigungsverhalten bei der Prädiktion der Abfangflugbahn 24. Der Vergleich startet erneut und die neue Hypothese zum Beschleunigungsverhalten wird überprüft.

Wie in FIG 2 dargestellt ist, hat der Flugkörper 2 einen Ausweichflug nach rechts oben begonnen. Der mittels des Lenkgesetzes der Proportionalnavigation gesteuerte Abfangflugkörper 22 ist diesem Ausweichflug gefolgt mit dem Ziel des Verschwindens der Sichtliniendrehrate, sodass der Abfangflugkörper 22 auf Kollisionskurs mit dem Flugkörper 2 bleibt. Die beiden Punkte auf den Flugbahnen 18, 24 geben den zeitgleichen Aufenthaltsort von Abfangflugkörper 22 und Flugkörper 2 auf ihren Flugbahnen 18, 24 an. Mittels MPG wird von Teilstück 26 zu Teilstück 26 jeweils eine aus vielen prädizierten Eigenflugbahnen 18 mittels Bewertung ausgewählt, mit denen ein erfolgreiches Ausweichen ermöglicht wird. Zu jedem der Teilstücke 26, deren Grenzen in FIG 2 mit gestrichelten Linien angedeutet sind, wird mittels MPG eine Eigenflugbahn 18 ausgewählt und entlang dieses Teilstücks 26 abgeflogen, während das MPG-Verfahren wieder eine aktualisierte Eigenflugbahn 18 für das nächste Teilstück 26 aus einer Vielzahl berechneter Eigenflugbahnen 18 mittels Bewertung auswählt. Hierbei werden die beiden Querbeschleunigungen des Ausweichmanövers mit abnehmender Flugzeit zum Abfangflugkörper 22 stetig erhöht, sodass die Ausweichmanöver immer schärfer werden.

Dies ist in FIG 3 dargestellt. Beide Flugkörper 2, 22 sind zeitgleich an den beiden Punkten gewesen und sind später zeitgleich an den beiden Sternen auf den Flugbahnen 18, 24. Zu diesem Zeitpunkt vollzieht die Eigenflugbahn 18 eine scharfe Wende, sodass beide Flugkörper 2, 22 an den Punkt des nahesten Abstands 28 zueinander kommen, der in FIG 3 durch eine kurze, gepunktete Linie angedeutet ist. Der naheste Abstand beträgt 18 m und ist daher zu groß für ein erfolgreiches Abfangen des Flugkörpers 2 durch den Abfangflugkörper 22. Der Abfangflugkörper 22 kann dem kurzzeitig starken Ausweichmanöver nicht mehr folgen, sodass beide Flugkörper 2, 22 einander verfehlen und zum gleichen Zeitpunkt an die mit einem Quadrat symbolisch gekennzeichneten Stellen der Flugbahnen 18, 24 kommen. Durch das Verfehlen kann der Abfangflugkörper 22 den Flugkörper 2 nicht mehr erreichen und stürzt aufgrund des Erlöschens seines Triebwerks nach einer Restflugzeit ins Meer. Mit dem erfolgreichen Ausweichen beendet die Steuereinheit 10 die weitere Prädiktion der Abfangflugbahn 24, wie in FIG 3 durch den kleinen Strich am Ende der Abfangflugbahn 24 angedeutet ist. Die Eigenflugbahn schwenkt mit verhältnismäßig geringer Querbeschleunigung in Richtung auf das Ziel 14 zu und fliegt dieses an.

Bei einem konzertierten Angriff auf den Flugkörper 2 durch mehrere Abfangflugkörper 22 erfolgt das Ausweichen und der Flug zum Ziel 14 in gleicher Weise, wobei der Sucher 12 die mehreren Abfangflugkörper 22 jeweils verfolgt und die Prädiktion neben der Eigenflugbahn 18 alle Abfangflugbahnen 24 der Abfangflugkörper 22 enthält. Die Bewertung der Eigenflugbahn 18 enthält alle nahesten Abstände 28 zu allen Abfangflugkörpern 22, sodass diejenige Eigenflugbahn 18 ausgewählt wird, die die besten Abstandsdaten in Bezug zu allen Abfangflugkörpern 22 aufweist. Auch die Hypothese zum Beschleunigungsverhalten der einzelnen Abfangflugkörper 22 werden durch die Steuereinheit 10 überprüft, sodass auch verschiedene Verhalten bei den mehreren Abfangflugkörpern 22 erkannt und in der Prädiktion berücksichtigt werden können.

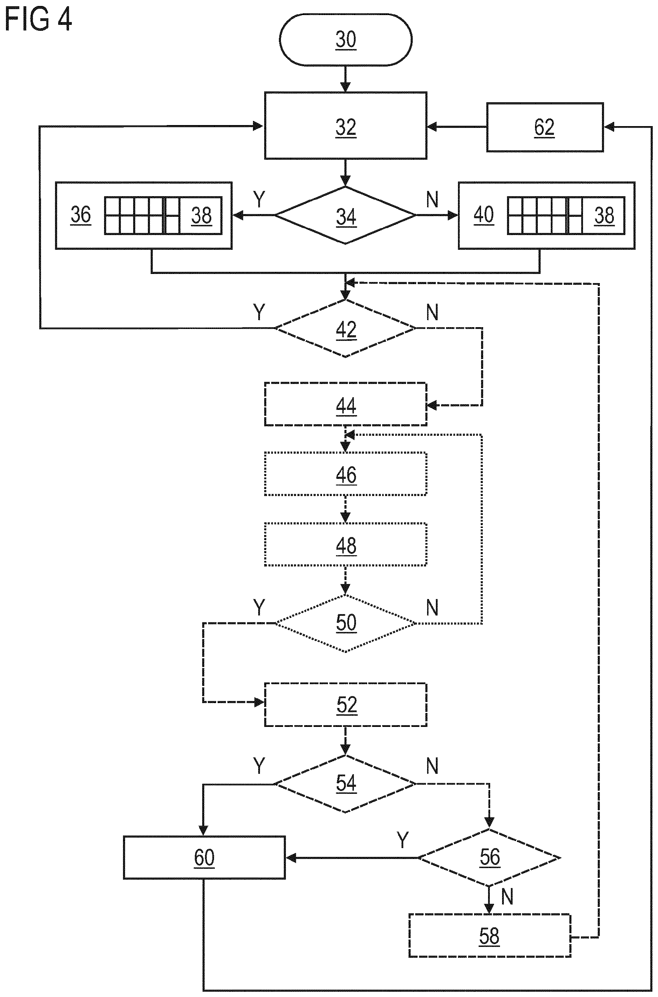

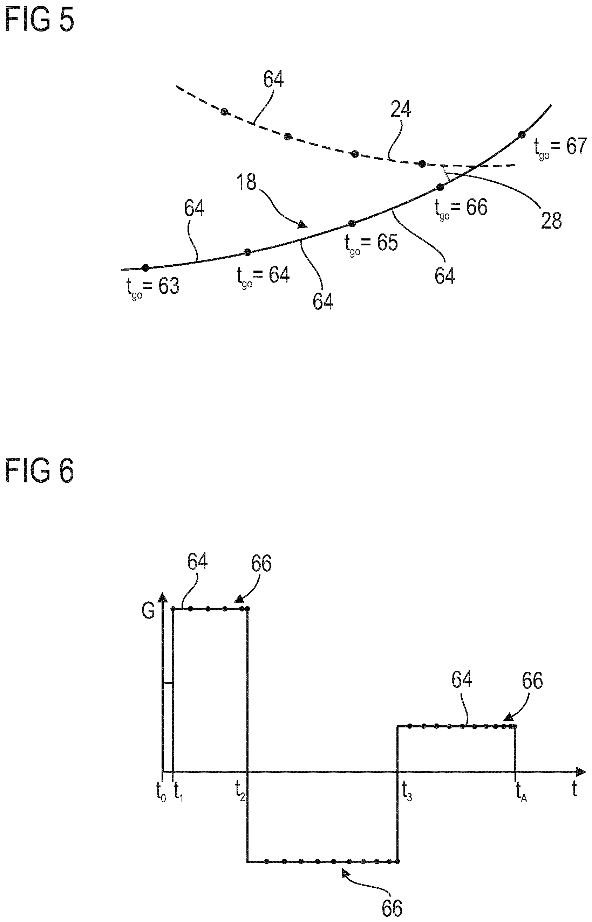

FIG 4 zeigt ein Flussdiagram eines MPG-Verfahrens zur Bestimmung einer Eigenflugbahn 18 des Flugkörpers 2 zum Ziel 14. Die einzelnen Schritte werden von der Steuereinheit 10 des Flugkörpers 2 ausgeführt und sind im Folgenden beschrieben.
- 30: Beginn des Verfahrens, Beginn des MPG-Zyklus (Model Predictive Guidance). Dieser Zyklus ist in FIG 4 in durchgezogenen Feldern und Pfeilen dargestellt. Er umschließt den Planungszyklus (gestrichelte Felder und Pfeile), der wiederum den Prädiktionszyklus (punktierte Felder und Pfeile) umschließt, und durchläuft für jedes Teilstück 26 (siehe FIG 2) der Eigenflugbahn 18 einen Durchlauf.
- 32: Beginn des ersten Durchlaufs des MPG-Zyklus. Er umschließt nach initialisierenden Schritten 32 - 40 den Planungszyklus. Die initialisierenden Schritte 32 - 40 sind:
a) Einlesen der Startbedingungen, wie die Position, Geschwindigkeit mit Richtung des Ziels 14 und der Flugzustand des Abfangflugkörpers 22, wie Position, Geschwindigkeit mit Richtung des Abfangflugkörpers 22, denn aus diesem wird der aktuelle Flugpunkt des Abfangflugkörpers 22 abgeleitet, von dem aus eine Vielzahl von Abfangflugbahnen 18 berechnet werden, die alle vom gleichen aktuellen Flugpunkt beginnen.
b) Einlesen des eigenen Flugzustands aus der bordeigenen Navigationsrechnung und/oder externen Daten, wie von einer Bodenstation oder Satelliten. Hierzu gehört das Einlesen der eigenen Position im Raum, denn aus diesem wird der aktuelle Flugpunkt abgeleitet, von dem aus eine Vielzahl von Eigenflugbahnen 18 berechnet werden, die alle vom gleichen aktuellen Flugpunkt beginnen.
- 34: Abfrage: Erster MPG-Zyklus?
- 36: Ja: Initialisierung der Startwerte der Steuerparameter (erste Steuergrößen) von Flugkörper 2 und Abfangflugkörper 22 zur aktiven Beeinflussung der Eigenflugbahn 18 bzw. der Abfangflugbahn24.
- 38: Prädiktor mit mehreren Steuergrößen der Querbeschleunigung von Flugkörper 2 und Abfangflugkörper 22, dem Bewegungszustand des Ziels 14, den Flugzuständen von Flugkörper 2 und Abfangflugkörper 22 und diversen Randbedingungen. Die Steuergrößen, Zustände und Randbedingungen sind im Prädiktor 38 mit einzelnen Kästchen in Anzahl und Art nur symbolisch dargestellt.
- 40: Nein, nicht erster MPG-Zyklus: Übernahme der Steuergrößen für Flugkörper 2 und Abfangflugkörper 22 aus dem letzten Durchlauf des MPG-Zyklus als Startwerte der Steuerparameter. In beiden Schritten 36, 40 enthält der Prädiktor 38 eine mathematische Beschreibung einer Flugbahnen 18, 24 des Flugkörpers 2 und des Abfangflugkörpers 22. In Schritt 36 jeweils eine erste, unoptimierte Flugbahn, in Schritt 40 die Flugbahnen 18, 24 des letzten Planungszyklus.
- 42: Abfrage: Liegen neue Flugzustände des Abfangflugkörpers 22 vor? Falls ja, werden diese im Schritt 32 eingelesen. Falls nein, beginnt der Planungszyklus.
- 44: Initialisierung der Prädiktion der Flugbahnen 18, 24, T_{go} = 0, die Restflugzeit wird auf Null gesetzt.
- 46: Berechnung der Prädiktionsschrittweite ΔT. Sie ist unten zu den FIGs 5 und 6 ausführlich beschrieben.
- **48**: **Prädiktionsschritt** T_{go} := T_{go} + ΔT. In jedem Prädiktionsschritt werden die Flugbahnen 18, 24 für diesen Schritt berechnet. Die Flugbahnen 18, 24 starten vom aktuellen Flugpunkt des Flugkörpers 2 bzw. des Abfangflugkörpers 22. Sie werden anhand der Steuergrößen berechnet, wobei Schub und Widerstand beider Flugkörper 2, 22 einbezogen werden.
- 50: Abfrage: Hat der Flugkörper 2 das Ziel 14 erreicht? Ist das nicht der Fall, so springt das Verfahren zurück zu Schritt 46, in dem die Prädiktionsschrittweite ΔT des nächsten Schritts berechnet wird und in Schritt 48 die Flugbahnen 18, 22 im nächsten Prädiktionsschritt berechnet werden. Es kann eine analoge Abfrage geben, ob sich der Abstand zwischen Flugkörper 2 und Abfangflugkörper 22 vergrößert, sodass das Ausweichen beendet ist und die Berechnung der Abfangflugbahn 24 beendet werden kann.
- 52: Hat die Prädiktion der Eigenflugbahn 18 das Ziel 14 erreicht, so ist die Berechnung der Eigenflugbahn 18 abgeschlossen. Nun wird ihre Güte anhand der Güte- oder Kostenfunktion bestimmt.
- 54: Abfrage: Ist das temporäre Güteoptimum erreicht?
- 56: Nein. Abfrage: Ist ein Abbruchkriterium zum Abbrechen des Planungszyklus erreicht.
- 58: Liegt kein Abbruchkriterium vor, werden die Steuergrößen variiert und das Verfahren springt zurück zu Schritt 42. Ohne neue Flugzustände beginnt ein neuer Durchlauf des Planungszyklus und es werden neue Flugbahnen 18, 24 berechnet und bewertet, die vom gleichen aktuellen Flugpunkt beginnen. Sollten sich zwischenzeitlich neue Flugzustände eingestellt haben, so werden sie über die Schritte 42 und 32 aufgenommen und der Planungszyklus beginnt von vorne. Die bisherigen Flugbahnen 18, 24 des bisherigen Planungszyklus werden verworfen, da deren Güten sich noch auf die alten Flugzustände beziehen und nicht mehr korrekt sind.
- 60: Liegt ein Abbruchkriterium vor, so werden die Güteergebnisse der bisher errechneten Eigenflugbahnen 18 miteinander verglichen und die Eigenflugbahn 18 mit dem besten Güteergebnis wird als temporäres Güteoptimum angesehen.
- 60: Auch wenn die Abfrage 54 positiv ist, also das temporäre Güteoptimum erreicht wurde, so ist der Planungszyklus beendet. Die Eigenflugbahn 18 mit dem Güteoptimum wird als Grundlage zur Flugsteuerung herangezogen. Das heißt, dass die zu Berechnung dieser Eigenflugbahn 18 verwendeten Steuergrößen nun zur Steuerung bzw. Lenkung des realen Flugs verwendet werden. Der Flugkörper 2 wird entlang dieses Teilstücks 26 der Eigenflugbahn 18 gesteuert, wobei während dieses Flugs der nächste Planungszyklus für das nachfolgende Teilstück 26 begonnen wird. Hierfür springt das Verfahren über Schritt 62 zurück zu Schritt 32.
- 62: Eventuelles Warten einer vorgegebenen Zeit, bis der neue Planungszyklus beginnt.
- 32: Es beginnt der nächste Durchlauf des MPG-Zyklus. Es werden die Flugzustände des Flugkörpers 2 und des Abfangflugkörpers 22 aktualisiert und über die Abfrage 34 in Schritt 40 der Prädiktor 38 aktualisiert, wobei dieser die optimierten Steuergrößen aus dem letzten Planungszyklus erhält.

**In jedem der** Prädiktionsschritte aus Schritt 48 werden die Flugbahnen 18, 24 für diesen Schritt berechnet. Hierbei kann erst die Eigenflugbahn 18 berechnet werden und dann die Abfangflugbahn 24 als Reaktion auf die Eigenflugbahn 18. Hierfür gibt es zwei Methoden: Es kann erst die ganze Eigenflugbahn 18 und dann die ganze Abfangflugbahn 24 berechnet werden oder es wird zunächst der nächste Schritt der Eigenflugbahn 18 berechnet und dann als Reaktion darauf der auf diesen Abschnitt reagierender Abschnitt der Abfangflugbahn 24, da der Abfangflugkörper 22 in der Realität auf jeden Schritt der Eigenflugbahn 18 mit seinem Lenkgesetz reagiert. Die Schrittweite ΔT der Prädiktionsschritte beider Flugbahnen 18, 24 kann hierbei so gewählt werden, wie die zeitliche Verzögerung der Reaktion des Abfangflugkörpers 22 in der Realität ist, also wie lange er braucht um auf eine Kursänderung des Flugkörpers 2 zu reagieren. Hierdurch wird der reale Ablauf der Verfolgung Schritt für Schritt in der Prädiktion abgebildet.

In Schritt 52 wird die Güte der Eigenflugbahn 18 bestimmt, die Eigenflugbahn 18 wird bewertet. Dies kann unter Verwendung von einem oder mehreren Gütekriterien erfolgen. Eines der Gütekriterien ist die naheste Annäherung 28. Die Güte des Ausweichens kann anhand der Zielablage aus Sicht des Abwehrflugkörpers 22 bewertet werden. Diese Zielablage sollte maximiert werden. Dabei gilt es, kleine Zielablagen hart im Güteergebnis zu bestrafen, wohingegen die Vergrößerung ohnehin schon ausreichend großer Zielablagen keinen signifikanten Beitrag zum Güteergebnis mehr liefern sollte. Daher kann der naheste Abstand bzw. die Zielablage exponentiell bewertet werden, beispielsweise mit der Mindestablage minus tatsächlicher Ablage im Exponenten.

Außerdem fließt das Gütekriterium der Treffergenauigkeit im Ziel 14 mit in die Bewertung ein. Weiter ist ein Gütekriterium, wie viel Treibstoff für das Triebwerk 4 im Ziel14 rechnerisch noch übrig ist. Je mehr Treibstoff vorhanden ist, desto höher ist die Bewertung, da viel Treibstoff weitere und scharfe Ausweichmanöver erlaubt bei eventueller weiterer Bekämpfung. Ebenso geht die Geschwindigkeit des Flugkörpers 2 im Ziel 14 in die Bewertung ein. Hierbei kann ein Geschwindigkeitsquantum gleichgesetzt werden mit einer vorbestimmten Treibstoffmenge. Bei einem konzertierten Angriff auf das Ziel 14 durch mehrere Flugkörper 2 wird zudem die Einhaltung einer gemeinsamen Ankunftszeit der Flugköper 2 im Ziel 14 bewertet, sowie die Einhaltung einer mit den anderen Flugkörpern abgestimmten Ankunftsrichtung an das Ziel 14. Insofern kann eine Begegnungsgeometrie von Flugkörper 2 und Ziel 14 bewertet werden. Ein weiteres Gütekriterium ist die Flugzeit vom aktuellen Flugpunkt zum Ziel 14. Je kleiner die Flugzeit ist, desto höher ist die Bewertung oder Güte.

FIG 5 zeigt jeweils einen Endteil der berechneten Flugbahnen 18, 24. Der Prädiktionszyklus hat bei T_{go} = 0 begonnen, wobei bei jedem Prädiktionsschritt 64 T_{go} um 1 bzw. ΔT hochgesetzt wird. Auf diese Weise nähern sich die beiden Flugbahnen 18, 24 bzw. der Flugkörper 2 und der Abfangflugkörper 22 aneinander an bis sie während des 66sten Prädiktionsschritts 64 die naheste Annäherung 28 erfahren. Zu Beginn des 67sten Prädiktionsschritts 64 hat sich der Abstand wieder vergrößert, die Annäherungsgeschwindigkeit wird negativ und die Prädiktion der Abfangflugbahn 24 kann beendet werden. Die naheste Annäherung 28 wird bestimmt und bewertet. Die Abfangflugbahn 24 des Abfangflugkörpers 22 wird analog zur Eigenflugbahn 18 des Flugkörpers 2 bestimmt, wie anhand der Punkte auf der Abfangflugbahn 24 angedeutet ist. Auch hier sind die gleichen Prädiktionsschritte 64 gezeigt, wobei auf deren gleicher Beschriftung wie bei der Eigenflugbahn 18 der Übersichtlichkeit halber verzichtet wurde.

FIG 6 zeigt ein Diagramm einer der Querbeschleunigungen G des Flugkörpers 2 über die Zeit. Die anderen Beschleunigungen, auch des Abfangflugkörpers 22, können in gleicher Weise beschrieben werden. Jede berechnete Eigenflugbahn 18 wird in mehrere Abschnitte 66 eingeteilt, im gezeigten Beispiel drei Abschnitte 66. t₀ gibt den aktuellen Zeitpunkt an, während dem die Berechnung stattfindet. Für den Fall, dass der aktuelle Flugpunkt eine kleine Zeitdauer in der Zukunft liegt, gibt t₁ den Zeitpunkt an, an dem der Flugkörper 2 den aktuellen Flugpunkt erreicht. Von diesem Zeit- bzw. Ortspunkt werden alle Eigenflugbahnen 18 berechnet. Es kann der Beginn eines Teilstücks 26 der Eigenflugbahn 18 sein. Die Zeitpunkte t₂, t₃ und t_{A} markieren jeweils das Ende der drei Abschnitte 66. Zum Zeitpunkt t_{A} ist die naheste Annäherung 28 - vermutlich - erreicht, wobei sich das erst im Laufe der Prädiktion, also der Berechnung der Eigenflugbahn 18, herausstellt. Während eines jeden der Abschnitte 66 ist die Querbeschleunigung G des Flugkörpers 2 in beide Raumrichtungen konstant. In FIG 6 ist nur eine der beiden Querbeschleunigungen G gezeigt, beispielsweise in y-Richtung, die entlang der drei Abschnitte 66 drei freie, also wählbare, Steuergrößen ergibt.

Die Länge der Prädiktionsschritte 64 wird in Schritt 46 festgelegt. Sie kann für jeden Prädiktionsschritt 64 individuell festgelegt werden. Hierbei kann eines oder mehrere der folgenden Kriterien herangezogen werden:
- alle Steuergrößen sollen während eines Prädiktionsschritts 64 gleich bleiben, sie sollen sich also nur von einem zum nächsten Prädiktionsschritt 64 verändern. Auf den Zeitpunkt einer Größenveränderung wird ein Prädiktionsschritt 64 gelegt.
- Ändert sich ein Manöver des Abfangflugkörpers 22, so wird an den Zeitpunkt der Änderung ein Prädiktionsschritt 64 gelegt.
- Die Schrittweite ΔT wird umgekehrt proportional zu einer Manöverstärke/Beschleunigung gewählt.
- Ändert sich ein Lenkmanöver des Flugkörpers 2, so wird ein Prädiktionsschritt 64 auf den Zeitpunkt der Änderung gelegt.
- Die Schrittweite ΔT nimmt mit einem Abstand des Flugkörpers 2 zum Abfangflugkörper 22 ab. Beispielsweise wird sie proportional zum Abstand des Flugkörpers 2 zum Abfangflugkörper 22 gewählt.

Reicht beispielsweise einer der Prädiktionsschritte 64 über einen Abschnitt 66 hinaus, so würde sich während des Prädiktionsschritts 64 die Steuergröße ändern, vermutlich beide Steuergrößen und ggf. auch die Steuergröße des Starts des zweiten Triebwerkspulses. Dies würde die Integration des Prädiktionsschritts 64 erheblich stören. Daher wird der letzte Prädiktionsschritt 64 am Ende eines jeden Abschnitts 66 abgebrochen, sodass der nächstfolgende Prädiktionsschritt 64 mit dem neuen Abschnitt 66 beginnt. Hier ist dann der Prädiktionsschritt 64 kürzer als die Länge ΔT zuvor.

Alternativ zu den über einen Abschnitt 66 konstanten Steuergrößen können die Steuergrößen Funktionen über die Zeit bilden. Die Steuergrößen sind nicht konstant, sondern können von Prädiktionsschritt 64 zu Prädiktionsschritt 64 schrittweise verändert werden oder sogar kontinuierlich verändert werden, sodass die Prädiktionsschritte 64 jeweils veränderliche Querbeschleunigungen G aufweisen. Die Funktionen können von Abschnitt 66 zu Abschnitt 66 variiert werden.

In Schritt 56 werden die Steuergrößen variiert. Das geschieht unter Nutzung eines Suchverfahrens zur numerischen Parameteroptimierung, z.B. mittels Gauß-Seidel, Newton o.ä. Besonders vorteilhaft ist ein Simplexverfahren, wie nach Nelder-Mead.

In Schritt 54 findet die Abfrage statt, ob das temporäre Güteoptimum erreicht ist. Mit Erreichen des Güteoptimums kann der aktuelle Planungszyklus beendet werden. Das Güteoptimum muss kein absolutes Optimum sein, ein temporäre Optimum ist ausreichend, also die beste zur Verfügung stehende Eigenflugbahn 18. Das Güteoptimum kann als erreicht angesehen werden, wenn zumindest eine der Bewertungen einen vorbestimmten Güteschwellwert erreicht. Dies kann das Hauptkriterium sein, dem folgende weitere Kriterien untergeordnet sind. Wenn die Bewertungen beispielsweise gegen eine Konstante laufen, ist deutlich, dass eine weitere Variation der Eigenflugbahnen 18 vermutlich nicht zu einer deutlichen Vergrößerung der Güte führen wird. Die Prädiktionen können abgebrochen und der Planungszyklus kann beendet werden. Auch wenn bei der Variation der Steuergrößen der Raumabstand der Steuergrößen im Parameterraum unter einen vorbestimmten Grenzwert fällt, haben die Prädiktionen ihre Grenzen erreicht und können abgebrochen werden. Ist schließlich keines der obigen Kriterien erreicht, so kann als letztes Kriterium eine Maximalanzahl an berechneten Eigenflugbahnen 18 den Planungszyklus beenden. Der Flugkörper 2 verwendet die beste vorhandene Eigenflugbahn 18, die dann mit Beginn des nächsten Teilstücks 28 verbessert werden kann.

Normalerweise wird ein neuer Planungszyklus begonnen, wenn der letzte Planungszyklus abgeschlossen ist. Es kann jedoch vorkommen, dass andere Kriterien zum Beginn eines neuen Planungszyklus vorteilhafter sind. Ist beispielsweise sehr schnell eine optimale Eigenflugbahn 18 gefunden, kann mit dem Beginn eines Planungszyklus eine Weile gewartet werden (Schritt 62), z.B. bis ein vorbestimmter Zeitpunkt erreicht ist oder eine Wartezeit vergangen ist. Wenn neue Daten zum Ziel und/oder zu dem oder einem Abfangflugkörper 22 vorliegen, ist es ebenfalls vorteilhaft, einen neuen Planungszyklus zu beginnen. Entweder wird der noch laufende Planungszyklus abgebrochen und dessen Ergebnisse verworfen, wie zu Schritt 42 beschrieben ist, oder die Wartezeit in Schritt 62 wird vorzeitig beendet.

### Bezugszeichenliste

- 2: Flugkörper
- 4: Triebwerk
- 6: Lenkflügel
- 8: Wirkkörper
- 10: Steuereinheit
- 12: Sucher
- 14: Ziel
- 16: Radarstrahlung
- 18: Eigenflugbahn
- 20: Radar
- 22: Abfangflugkörper
- 24: Abfangflugbahn
- 26: Teilstück
- 28: Abstand / naheste Annäherung
- 30: Beginn des Verfahrens
- 32: Beginn des MPG-Zyklus
- 34: Abfrage: Erster MPG-Zyklus?
- 36: Initialisierung der Steuergrößen
- 38: Prädiktor
- 40: Übernahme der Steuergrößen
- 42: Abfrage: Liegen neue Zieldaten vor?
- 44: Initialisierung der Prädiktion
- 46: Berechnung der Prädiktionsschrittweite
- 48: Setzen eines neuen Prädiktionsschritts
- 50: Abfrage: Naheste Annäherung erreicht?
- 52: Berechnung der Gütefunktion
- 54: Abfrage: Temporäres Güteoptimum erreicht?
- 56: Abfrage: Abbruchkriterium erreicht?
- 58: Steuergrößen variieren, Beginn erneuter Durchlauf des Planungszyklus
- 60: Planungszyklus beendet. Neuer Durchlauf des MPG-Zyklus
- 62: Wartezeit
- 64: Prädiktionsschritt
- 66: Abschnitt
- G: Querbeschleunigung
- T_{go}: Restflugzeit
- ΔT: Prädiktionsschrittweite

## Patentansprüche

1. Verfahren zum Ausweichen eines Flugkörpers (2) vor einem Abfangflugkörper (22), bei dem der Flugkörper (2) mit einem Triebwerk auf ein zu bekämpfendes Ziel (14) zufliegt, und den Abfangflugkörper (22) mit einem Sucher (12) auffasst,
**dadurch gekennzeichnet,**
**dass** der Flugkörper (2) in einem Planungszyklus
a) eine Prädiktion einer möglichen Eigenflugbahn (18) des Flugkörpers (2) zum Ziel (14) und eine mögliche Abfangflugbahn (24) des Abfangflugkörpers (22) mit einem Prädiktor (38) erstellt (48),
b) ein Ausweichen des Flugkörpers (2) vor dem Abfangflugkörper (22) und eine Annäherung des Flugkörpers (2) ans Ziel (14) anhand des Prädiktors (38) bestimmt und bewertet (52),
c) weitere Prädiktionen (48) möglicher Eigenflugbahnen (18) erstellt durch mehrfache Variationen von Steuergrößen des Flugkörpers (2), wobei der Flugkörper (2) sein aus den Eigenflugbahnen (18) resultierendes prädiziertes Ausweichen vor dem Abfangflugkörper (22) und seine Annäherungen ans Ziel (22) jeweils anhand von vorgegebenen Gütekriterien bewertet (52), wobei ein Gütekriterium ist, wie viel Treibstoff für das Triebwerk in einem Annäherungsgebiet des Flugkörpers (2) an das Ziel (14) rechnerisch noch übrig ist, und/oder ein Gütekriterium die Geschwindigkeit des Flugkörpers (2) im Ziel (14) ist, wobei ein Geschwindigkeitsquantum mit einer vorbestimmten Treibstoffmenge gleichgesetzt wird, wobei die Bewertung für diese Gütekriterien desto höher ist, je mehr Treibstoff vorhanden ist, und
d) anhand der Bewertungen aus den verschiedenen Eigenflugbahnen (18) die Eigenflugbahn (18) mit der höchsten Güte auswählt (60), und
ein erstes Teilstück (26) dieser Eigenflugbahn (18) mit den dieser Eigenflugbahn (18) zugrunde liegenden Steuergrößen zum Lenken des Flugkörpers (2) abfliegt und den Planungszyklus mehrfach für nachfolgende Teilstücke (26) wiederholt.

2. Verfahren nach Anspruch 1,
**dadurch gekennzeichnet,**
**dass** der Abfangflugkörper (22) vom Flugkörper (2) mittels des Suchers (12) verfolgt wird und die bereits verfolgte reale Abfangflugbahn (24) bei der Erstellung der prädizierten möglichen Abfangflugbahn (24) berücksichtigt wird.

3. Verfahren nach Anspruch 1 oder 2,
**dadurch gekennzeichnet,**
**dass** zur Prädiktion der Abfangflugbahn (24) die Annahme verwendet wird, dass die Abfangflugbahn (24) eine Reaktion auf die Eigenflugbahn (18) ist.

4. Verfahren nach Anspruch 3,
**dadurch gekennzeichnet,**
**dass** die Reaktion durch ein Lenkgesetz erfolgt.

5. Verfahren nach Anspruch 4,
**dadurch gekennzeichnet,**
**dass** das Lenkgesetz die Proportionalnavigation ist.

6. Verfahren nach einem der vorhergehenden Ansprüche,
**dadurch gekennzeichnet,**
**dass** zu jeder weiteren Prädiktion einer Eigenflugbahn (18) eine korrespondierende Abfangflugbahn (24) erstellt wird und das Bewerten des Ausweichens beide Flugbahnen (18, 24) einbezieht.

7. Verfahren nach einem der vorhergehenden Ansprüche,
**dadurch gekennzeichnet,**
**dass** erst zumindest ein Abschnitt der Eigenflugbahn (18) prädiziert wird und dann ein auf diesen Abschnitt reagierender Abschnitt der Abfangflugbahn (24) als Reaktion auf die Eigenflugbahn (18).

8. Verfahren nach einem der vorhergehenden Ansprüche,
**dadurch gekennzeichnet,**
**dass** die vom Sucher (12) erfasste Abfangflugbahn (24) mit der zuvor prädizierten Abfangflugbahn (24) vergleicht und bestimmt wird, ob die Abfangflugbahn (24) einem angenommenen Beschleunigungsverhalten folgt.

9. Verfahren nach einem der vorhergehenden Ansprüche,
**dadurch gekennzeichnet,**
**dass** zumindest eine Querbeschleunigung (G) des Ausweichmanövers mit abnehmender Flugzeit zum Abfangflugkörper (22) insbesondere stetig erhöht wird.

10. Verfahren nach einem der vorhergehenden Ansprüche,
**dadurch gekennzeichnet,**
**dass** die naheste Annäherung (28) des Abfangflugkörpers (22) an den Flugkörper (2) bestimmt wird und in die Bewertung mit eingeht.

11. Verfahren nach einem der vorhergehenden Ansprüche,
**dadurch gekennzeichnet,**
**dass** vor einem Auffassen des Abfangflugkörpers (22) durch den Sucher (12) ein Ausweichmanöver des Flugkörpers (2) unterbleibt.

12. Verfahren nach einem der vorhergehenden Ansprüche,
**dadurch gekennzeichnet,**
**dass** der Sucher (22) mehrere Abfangflugkörper (22) auffasst und von jedem der Abfangflugkörper (22) eine mögliche Abfangflugbahn (24) erstellt, wobei in die Bewertung eine naheste Annäherung (28) des Flugkörpers (2) zu jedem der Abfangflugkörper (22) eingeht.

13. Verfahren nach einem der vorhergehenden Ansprüche,
**dadurch gekennzeichnet,**
**dass** der Sucher (12) mehrere Abfangflugkörper (22) auffasst und zur Erstellung der möglichen Abfangflugbahnen (24) den Abfangflugkörpern (22) unterschiedliche Lenkgesetze zugeordnet werden.

14. Flugkörper (2) zum Bekämpfen eines Ziels (14) mit einem Triebwerk (4) und einer Steuereinheit (10), die dazu vorbereitet ist, einen Flug zum Ziel (14) zu lenken, und einem Sucher (12) zum Auffassen eines Abfangflugkörpers (22),
**dadurch gekennzeichnet,**
**dass** die Steuereinheit (10) dazu vorbereitet ist, in einem Planungszyklus
a) eine Prädiktion einer möglichen Eigenflugbahn (18) des Flugkörpers (2) zum Ziel (14) und eine mögliche Abfangflugbahn (24) des Abfangflugkörpers (22) mit einem Prädiktor (38) zu erstellen (48),
b) ein Ausweichen des Flugkörpers (2) vor dem Abfangflugkörper (22) und eine Annäherung des Flugkörpers (2) ans Ziel (14) anhand des Prädiktors (38) zu bestimmen und zu bewerten (52),
c) weitere Prädiktionen möglicher Eigenflugbahnen (18) zu erstellen (48) durch mehrfache Variationen von Steuergrößen des Flugkörpers (2), wobei das resultierende Ausweichen des Flugkörpers (2) vor dem Abfangflugkörper (22) und die Annäherungen des Flugkörpers (2) ans Ziel (14) jeweils anhand von vorgegebenen Gütekriterien bewertet werden (52), wobei ein Gütekriterium ist, wie viel Treibstoff für das Triebwerk in einem Annäherungsgebiet des Flugkörpers (2) an das Ziel (14) rechnerisch noch übrig ist, und/oder ein Gütekriterium die Geschwindigkeit des Flugkörpers (2) im Ziel (14) ist, wobei ein Geschwindigkeitsquantum mit einer vorbestimmten Treibstoffmenge gleichgesetzt wird, wobei die Bewertung für diese Gütekriterien desto höher ist, je mehr Treibstoff vorhanden ist, und
d) anhand der Bewertungen aus den verschiedenen Eigenflugbahnen (18) die Eigenflugbahn (18) mit der höchsten Güte auszuwählen (60),
sowie eine Lenkung zum Fliegen entlang eines ersten Teilstücks (26) dieser Eigenflugbahn (18) mit den dieser Eigenflugbahn (18) zugrunde liegenden Steuergrößen zum Lenken des Flugkörpers (2) zu steuern, und den Planungszyklus mehrfach für nachfolgende Teilstücke (26) zu wiederholen.

## Claims

1. Method, for a missile (2), for evading an interceptor missile (22), in which the missile (2) uses an engine to fly towards a target (14) to be fought and detects the interceptor missile (22) using a viewfinder (12), **characterized**
**in that** the missile (2), in a planning cycle,
a) establishes (48) a prediction of a possible ego trajectory (18) of the missile (2) to the target (14) and a possible interception trajectory (24) of the interceptor missile (22) using a predictor (38),
b) determines and assesses (52) an evasion for the missile (2) from the interceptor missile (22) and an approach of the missile (2) towards the target (14) using the predictor (38),
c) establishes further predictions (48) of possible ego trajectories (18) through multiple variations of control variables of the missile (2), wherein the missile (2) assesses (52) its predicted evasion, resulting from the ego trajectories (18), from the interceptor missile (22) and its approaches towards the target (22) in each case on the basis of predefined quality criteria, wherein one quality criterion is how much fuel is computed to be left for the engine in an area of approach of the missile (2) towards the target (14), and/or one quality criterion is the velocity of the missile (2) at the target (14), wherein a velocity quantum is equated with a predetermined quantity of fuel, wherein the higher the assessment for these quality criteria, the more fuel is present, and
d) on the basis of the assessments, selects (60) the ego trajectory (18) having the highest quality from the various ego trajectories (18), and
flies a first section (26) of this ego trajectory (18) with the control variables for guiding the missile (2) that underlie this ego trajectory (18) and repeats the planning cycle multiple times for subsequent sections (26).

2. Method according to Claim 1,
**characterized**
**in that** the interceptor missile (22) is tracked by the missile (2) using the viewfinder (12) and the real interception trajectory (24) that has already been followed is taken into account when establishing the predicted possible interception trajectory (24).

3. Method according to Claim 1 or 2,
**characterized**
**in that** the assumption that the interception trajectory (24) is a response to the ego trajectory (18) is used to predict the interception trajectory (24).

4. Method according to Claim 3,
**characterized**
**in that** the response is implemented by a guidance law.

5. Method according to Claim 4,
**characterized**
**in that** the guidance law is proportional navigation.

6. Method according to one of the preceding claims,
**characterized**
**in that** a corresponding interception trajectory (24) is established for each further prediction of an ego trajectory (18) and the assessment of the evasion incorporates both trajectories (18, 24).

7. Method according to one of the preceding claims,
**characterized**
**in that** at least one portion of the ego trajectory (18) is predicted first, followed by a portion of the interception trajectory (24) that responds to this portion in response to the ego trajectory (18).

8. Method according to one of the preceding claims, **characterized**
**in that** the interception trajectory (24) captured by the viewfinder (12) is compared with the previously predicted interception trajectory (24), and it is determined whether the interception trajectory (24) follows an assumed acceleration behaviour.

9. Method according to one of the preceding claims, **characterized**
**in that** at least a transverse acceleration (G) of the evasive manoeuvre is increased, in particular constantly, as flight time to the interceptor missile (22) decreases.

10. Method according to one of the preceding claims, **characterized**
**in that** the closest approach (28) of the interceptor missile (22) to the missile (2) is determined and incorporated jointly into the assessment.

11. Method according to one of the preceding claims, **characterized**
**in that** no evasive manoeuvre of the missile (2) takes place before the interceptor missile (22) is detected by the viewfinder (12).

12. Method according to one of the preceding claims, **characterized**
**in that** the viewfinder (22) detects multiple interceptor missiles (22) and establishes a possible interception trajectory (24) of each of the interceptor missiles (22), wherein the assessment incorporates a closest approach (28) of the missile (2) to each of the interceptor missiles (22).

13. Method according to one of the preceding claims, **characterized**
**in that** the viewfinder (12) detects multiple interceptor missiles (22) and, in order to establish the possible interception trajectories (24), different guidance laws are assigned to the interceptor missiles (22).

14. Missile (2) for combating a target (14), having an engine (4) and a control unit (10) prepared to guide a flight to the target (14), and a viewfinder (12) for detecting an interceptor missile (22),
**characterized**
**in that** the control unit (10) is prepared, in a planning cycle,
a) to establish (48) a prediction of a possible ego trajectory (18) of the missile (2) to the target (14) and a possible interception trajectory (24) of the interceptor missile (22) using a predictor (38),
b) to determine and assess (52) an evasion for the missile (2) from the interceptor missile (22) and an approach of the missile (2) towards the target (14) using the predictor (38),
c) to establish (48) further predictions of possible ego trajectories (18) through multiple variations of control variables of the missile (2), wherein the resulting evasion for the missile (2) from the interceptor missile (22) and the approaches of the missile (2) towards the target (14) are assessed (52) in each case on the basis of predefined quality criteria, wherein one quality criterion is how much fuel is computed to be left for the engine in an area of approach of the missile (2) towards the target (14), and/or one quality criterion is the velocity of the missile (2) at the target (14), wherein a velocity quantum is equated with a predetermined quantity of fuel, wherein the higher the assessment for these quality criteria, the more fuel is present, and
d) on the basis of the assessments, to select (60) the ego trajectory (18) having the highest quality from the various ego trajectories (18), and
to control guidance so as to fly along a first section (26) of this ego trajectory (18) with the control variables for guiding the missile (2) that underlie this ego trajectory (18), and to repeat the planning cycle multiple times for subsequent sections (26).

## Revendications

1. Procédé d'évitement d'un missile (2) devant un missile intercepteur (22), avec lequel le missile (2), comprenant un groupe propulseur, se dirige en volant vers une cible à neutraliser (14) et détecte le missile intercepteur (22) avec un viseur (12),
**caractérisé en ce**
**que** le missile (2), dans un cycle de planification,
a) crée (48) une prédiction d'une trajectoire de vol propre (18) possible du missile (2) vers la cible (14) et d'une trajectoire de vol d'interception (24) possible du missile intercepteur (22) avec un prédicteur (38),
b) détermine et évalue (52) un évitement du missile (2) devant le missile intercepteur (22) et une approche du missile (2) vers la cible (14) à l'aide du prédicteur (38),
c) crée des prédictions supplémentaires (48) de trajectoires de vol propres (18) possibles par de multiples variations de variables de commande du missile (2), le missile (2) évaluant (52) son évitement prédit devant le missile intercepteur (22) résultant des trajectoires de vol propres (18) et ses approches de la cible (22) respectivement à l'aide de critères de qualité prédéfinis, un critère de qualité étant la quantité de carburant arithmétiquement restante pour le groupe propulseur dans une zone d'approche du missile (2) vers la cible (14) et/ou un critère de qualité étant la vitesse du missile (2) dans la cible (14), un quantum de vitesse étant mis au même niveau qu'une quantité de carburant prédéterminée, l'évaluation de ces critères de qualité étant d'autant plus élevée que la quantité de carburant présente est élevée, et
d) sélectionne (60) la trajectoire de vol propre (18) ayant la qualité la plus élevée à l'aide des évaluations des différentes trajectoires de vol propres (18), et parcourt en volant premier segment (26) de cette trajectoire de vol propre (18) avec les variables de commande sur lesquelles repose cette trajectoire de vol propre (18) pour le guidage du missile (2) et répète le cycle de planification plusieurs fois pour les segments (26) suivants.

2. Procédé selon la revendication 1,
**caractérisé en ce**
**que** le missile intercepteur (22) est suivi par le missile (2) au moyen du viseur (12) et la trajectoire de vol d'interception (24) réelle déjà suivie est prise en compte lors de la création de la trajectoire de vol d'interception (24) possible prédite.

3. Procédé selon la revendication 1 ou 2,
**caractérisé en ce**
**que** pour prédire la trajectoire de vol d'interception (24), l'hypothèse selon laquelle la trajectoire de vol d'interception (24) est une réaction à la trajectoire de vol propre (18) est utilisée.

4. Procédé selon la revendication 3,
**caractérisé en ce**
**que** la réaction s'effectue par une loi de guidage.

5. Procédé selon la revendication 4,
**caractérisé en ce**
**que** la loi de guidage est la navigation proportionnelle.

6. Procédé selon l'une des revendications précédentes, **caractérisé en ce**
**qu'**une trajectoire de vol d'interception (24) correspondante est créée pour chaque prédiction supplémentaire d'une trajectoire de vol propre (18) et l'évaluation de l'évitement implique les deux trajectoires de vol (18, 24).

7. Procédé selon l'une des revendications précédentes, **caractérisé en ce**
**qu'**au moins une portion de la trajectoire de vol propre (18) est prédite, et ensuite une portion de la trajectoire de vol d'interception (24) réagissant à cette portion en tant que réaction à la trajectoire de vol propre (18).

8. Procédé selon l'une des revendications précédentes, **caractérisé en ce**
**que** la trajectoire de vol d'interception (24) capturée par le viseur (12) est comparée à la trajectoire de vol d'interception (24) prédite précédemment et une détermination est effectuée afin de vérifier si la trajectoire de vol d'interception (24) suit un comportement d'accélération supposé.

9. Procédé selon l'une des revendications précédentes, **caractérisé en ce**
**qu'**au moins une accélération transversale (G) de la manœuvre d'évitement augmente, notamment constamment, à mesure que le temps de vol vers le missile intercepteur (22) diminue.

10. Procédé selon l'une des revendications précédentes, **caractérisé en ce**
**que** l'approche la plus proche (28) du missile intercepteur (22) par rapport au missile (2) est déterminée et intervient dans l'évaluation.

11. Procédé selon l'une des revendications précédentes, **caractérisé en ce**
**qu'**une manœuvre d'évitement du missile (2) est inhibée avant une détection du missile intercepteur (22) par le viseur (12).

12. Procédé selon l'une des revendications précédentes, **caractérisé en ce**
**que** le viseur (22) détecte plusieurs missiles intercepteurs (22) et crée une trajectoire de vol d'interception (24) possible de chacun des missiles intercepteurs (22), une approche la plus proche (28) du missile (2) de chacun des missiles intercepteurs (22) intervenant dans l'évaluation.

13. Procédé selon l'une des revendications précédentes, **caractérisé en ce**
**que** le viseur (12) détecte plusieurs missiles intercepteurs (22) et des lois de guidage différentes sont attribuées aux missiles intercepteurs (22) en vue de la création des trajectoires de vol d'interception (24) possibles.

14. Missile (2) destiné à combattre une cible (14), comprenant un groupe propulseur (4) et une unité de commande (10), qui est préparée pour guider un vol vers la cible (14), et un viseur (12) destiné à détecter un missile intercepteur (22),
**caractérisé en ce**
**que** l'unité de commande (10) est préparée pour, dans un cycle de planification,
a) créer (48) une prédiction d'une trajectoire de vol propre (18) possible du missile (2) vers la cible (14) et d'une trajectoire de vol d'interception (24) possible du missile intercepteur (22) avec un prédicteur (38),
b) déterminer et évaluer (52) un évitement du missile (2) devant le missile intercepteur (22) et une approche du missile (2) vers la cible (14) à l'aide du prédicteur (38),
c) créer (48) des prédictions supplémentaires de trajectoires de vol propres (18) possibles par de multiples variations de variables de commande du missile (2), l'évitement résultant du missile (2) devant le missile intercepteur (22) et les approches du missile (2) de la cible (14) étant respectivement évalués (52) à l'aide de critères de qualité prédéfinis, un critère de qualité étant la quantité de carburant arithmétiquement restante pour le groupe propulseur dans une zone d'approche du missile (2) vers la cible (14) et/ou un critère de qualité étant la vitesse du missile (2) dans la cible (14), un quantum de vitesse étant mis au même niveau qu'une quantité de carburant prédéterminée, l'évaluation de ces critères de qualité étant d'autant plus élevée que la quantité de carburant présente est élevée, et
d) à l'aide des évaluations des différentes trajectoires de vol propres (18), sélectionner (60) la trajectoire de vol propre (18) ayant la qualité la plus élevée, ainsi que commander un système de guidage pour voler le long d'un premier segment (26) de cette trajectoire de vol propre (18) avec les variables de commande sur lesquelles repose cette trajectoire de vol propre (18) pour le guidage du missile (2) et répéter le cycle de planification plusieurs fois pour les segments (26) suivants.
